# EUROPÄISCHE PATENTSCHRIFT

(11) **EP 1 127 752 B1**
(45) Veröffentlichungstag und Bekanntmachung des Hinweises auf die Patenterteilung: **27.10.2004**
(21) Anmeldenummer: 01102741.4
(22) Anmeldetag: 07.02.2001
(51) Int. Cl.: B60R 21/16

(54) **Verfahren zum Überführen eines Gassacks für ein Fahrzeuginsassen-Rückhaltesystem in eine für den Gassack vorgesehene Aufnahme**
Process for transfering an airbag for a passenger restraining system into a receiving portion provided for same
Procédé de transfert d'un coussin de gonflable pour un système de retenue d'un passager dans une partie amenagée pour la réception du coussin gonflable

(30) Priorität: 28.02.2000 DE 10009333
(43) Veröffentlichungstag der Anmeldung: 29.08.2001
(73) Patentinhaber: TRW Automotive GmbH, 73553 Alfdorf (DE)
(72) Erfinder: Hieber, Wolfgang, 73540 Heubach-Buch (DE); Strnad, Wilfried, 73557 Mutlangen (DE); Berger, Jürgen, 73557 Mutlangen (DE)
(74) Vertreter: Sties, Jochen, Dipl.-Ing.

(56) Entgegenhaltungen:
- EP-A- 0 839 691
- EP-A- 1 031 473
- WO-A-91/11346
- DE-A- 19 535 564
- US-A- 5 300 011
- US-A- 5 865 466

## Beschreibung

Die Erfindung betrifft ein Verfahren zum Überführen eines Gassacks für ein Fahrzeuginsassen-Rückhaltesystem in eine für den Gassack vorgesehene Aufnahme.

Der Gassack eines Fahrzeuginsassen-Rückaltesystems ist dafür vorgesehen, einen Fahrzeuginsassen bei einer Fahrzeugkollision vor Verletzungen zu schützen, die bei einem Aufprall des Insassen auf Teile des Fahrzeuginnenraums entstehen können. In seinem Ruhezustand ist der Gassack platzsparend zusammengefaltet und in einer im Fahrzeuginnenraum angeordneten Aufnahme untergebracht.

Wenn der Gassack Bestandteil eines vorgefertigten Moduls mit einem Gehäuse und einem darin untergebrachten Gasgenerator ist, wird der Gassack oft direkt in eine entsprechende Aufnahme des Modulgehäuses hineingefaltet. Die Faltung des Gassacks muß allerdings unmittelbar nach dem Faltvorgang dauerhaft in dem Gehäuse fixiert werden, da sie sich ansonsten vor der Anbringung der Gehäuseabdeckung wieder öffnen würde.

Eine andere Methode sieht vor, daß der Gassack zunächst gefaltet wird und die Faltung anschließend durch die geeignete Anbringung eines perforierten Gewebestreifens oder einer Kunststoffbanderole fixiert wird. Auf diese Weise kann der gefaltete Gassack als sog. "Prepack" zwischengelagert werden, bevor er als Komponente zur Modulmontage bereitgestellt wird. Nachteilig ist hierbei, daß der Gassack bereits vor der Faltung komplett verarbeitet sein muß, d.h. daß z.B. bereits alle Nähte und Fangbänder an dem Gassack angebracht sein müssen, da der Gassack nicht mehr zwischenzeitlich entfaltet werden kann. Aus demselben Grund bestehen auch Schwierigkeiten bei der Befestigung des Gassacks im Modulgehäuse, weil nach einer vorübergehenden Entfaltung des Gassacks, die für die Montage vorteilhaft wäre, die ursprüngliche Faltung verlorengeht.

Aus der WO-A-91 11346 ist ein Verfahnen der eingangs genannten Art bekannt, bei dem der Gassack nach einer anfänglichen Faltung mit einem Druck von ca. 690 bar (10000 psi) zusammengepreßt wind, bevor er in ein Gehäuse eines Airbagmoduls eingebaut wird. Ferner wird vorgeschlagen, den Gassack vor oder während des Pressens auf eine Temperatur von ca. 177°C (350°F) zu erwärmen.

Die Erfindung schafft ein einfaches Verfahren zum Überführen eines Gassacks für ein Fahrzeuginsassen-Rückhaltesystem in eine für den Gassack vorgesehene Aufnahme, das eine flexible Modulmontage ermöglicht.

Gemäß der Erfindung umfaßt das Verfahren folgende Schritte:
- Falten des Gassacks;
- Erwärmen des gefalteten Gassacks auf eine Temperatur zwischen 60 und 120°C;
- Pressen des gefalteten Gassacks mit einem Druck zwischen 1 und 2 bar und gleichzeitiges Abkühlen des gefalteten Gassacks; und
- Befestigen des Gassacks in der Aufnahme.

Durch das Erwärmen des Gassacks nach dem Falten und das anschließende Abkühlen des gefalteten Gassacks unter Druck bleibt die Faltung des Gassacks eine gewisse Zeit bestehen, ohne daß eine Fixierung notwendig ist. Der Gassack kann somit während dieser Zeit vor dem Befestigen in der Aufnahme zwischengelagert werden, da die Faltung nicht verlorengeht.

Es erweist sich als vorteilhaft, den Gassack nach dem Abkühlen im gefalteten Zustand zu halten. Dadurch wird die Faltung länger aufrechterhalten, so daß der Gassacks über eine längere Zeit vor dem Einbau in das Modul zwischengelagert werden kann. Dazu wird der Gassack vorzugsweise in eine Folie verpackt. Der Gassack kann aber auch in ein starres Formgehäuse oder zusammen mit mehreren weiteren Gassäcken in ein Magazin eingelegt werden.

Die Weiterbearbeitung nach dem Halten im gefalteten Zustand erlaubt es, daß der Gassack vor dem Falten noch nicht fertig konfektioniert sein muß. Verschiedene Bearbeitungsschritte können auch noch nach dem Falten durchgeführt werden, so daß eine äußerst flexible Gassackbearbeitung ermöglicht wird.

Die Weiterbearbeitung des Gassacks wird dadurch vereinfacht, daß er zwischenzeitlich wenigstens teilweise entfaltet wird. Dies ist möglich, weil der Gassack seine Faltung nach der Bearbeitung wieder einnehmen kann. Vorzugsweise werden an dem teilweise entfalteten Gassack Nähte oder Fangbänder angebracht. Somit können das Falten, das Nähen oder das Anbringen von Fangbändern in beliebiger Reihenfolge durchgeführt werden, bevor der Gassack in der Aufnahme befestigt wird.

Schließlich kann der Gassack bequem in der vorgesehenen Aufnahme befestigt werden, indem er wiederum zwischenzeitlich wenigstens teilweise entfaltet wird. So können beispielsweise auf einfache Weise Schrauben oder Niete zur Befestigung des Gassacks angebracht werden. Da die Faltung anschließend wieder hergestellt werden kann, ist es möglich, den Gassack letztendlich problemlos in der Aufnahme eines Modulgehäuses zu verstauen.

Weitere Merkmale und Vorteile der Erfindung ergeben sich aus der nachfolgenden Beschreibung eines bevorzugten Verfahrens gemäß der Erfindung unter Bezugnahme auf die Zeichnung. In dieser zeigen schematisch in Schnittansicht:
- Fig. 1: einen in ein Magazin eingelegten Gassack;
- Fig. 2: einen Gassack nach dem Halten im gefalteten Zustand;
- Fig. 3: einen teilweise entfalteten Gassack mit angenähtem Fangband;
- Fig. 4: einen teilweise entfalteten Gassack bei der Befestigung in einer Modulaufnahme; und
- Fig. 5: einen in einem Modul verstauten Gassack.

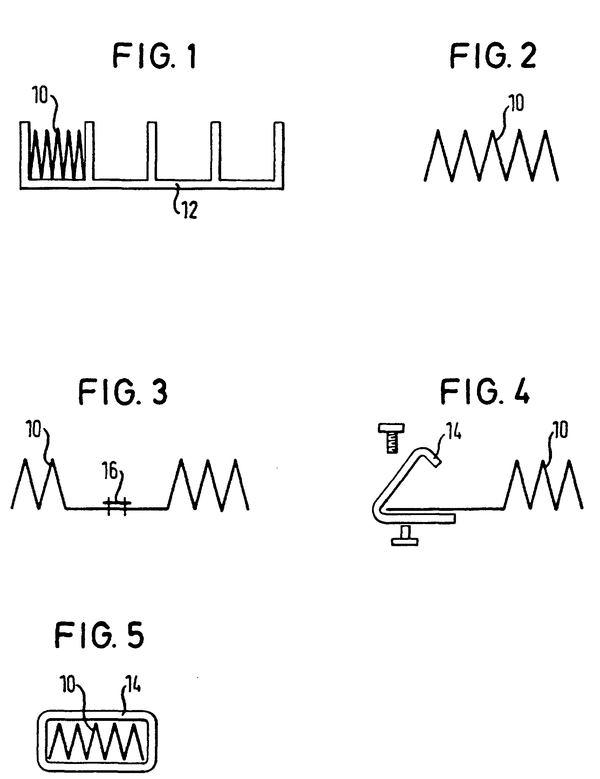

Ein teilweise zusammengenähter Gassack 10 wird auf herkömmliche Weise auf ein kleines Volumen gefaltet. Daraufhin wird das Faltpaket erfindungsgemäß auf eine Temperatur zwischen 60 und 120°C erwärmt. Der Gassack 10 wird in eine Preßvorrichtung eingelegt und erfindungsgemäß mit einem Druck zwischen 1 und 2 bar zusammengepreßt, wobei der Druck auf die Faltkanten von entscheidender Bedeutung ist. Während des Preßvorgangs wird der Gassack 10 auf Raumtemperatur abgekühlt. Anschließend wird der gefaltete Gassack 10 in eine Folie verpackt und zwischengelagert, so daß er in dem gefalteten Zustand gehalten wird. Alternativ kann der Gassack auch in ein starres Formgehäuse oder, wie in Fig. 1 gezeigt, in ein Magazin 12 eingelegt werden. So können mehrere Gassäcke 10 platzsparend zur nächsten Bearbeitungsstation oder zur Endmontage im Modul 14 transportiert werden.

Wie in Fig. 2 gezeigt, springt das Faltpaket nach dem Herausnehmen aus der Folie etwas auf, aber die Faltung des Gassacks 10 bleibt für mindestens eine Stunde erhalten. In dieser Zeit erfolgt die Weiterbearbeitung des Gassacks 10, die das Anbringen weiterer Nähte und Fangbänder 16 einschließt. Dazu wird der Gassack 10 an den entsprechenden Stellen manuell entfaltet, so daß die Nähte auf bequeme Weise angebracht werden können. Auf die gleiche Weise werden die Fangbänder 16 an dem Gassack 10 festgenäht. In Fig. 3 ist der teilweise entfaltete Gassack 10 mit einem angenähten Fangband 16 dargestellt. Nachdem die Weiterverarbeitung abgeschlossen ist, wird die Faltung manuell wieder hergestellt. Der Gassack 10 nimmt dann wieder die in Fig. 2 gezeigte Form ein.

Zuletzt wird der Gassack 10 in der dafür vorgesehenen Aufnahme eines Moduls 14 mit einem Gasgenerator (nicht gezeigt) befestigt. Der zu befestigende Bereich des Gassacks 10 wird dazu wiederum manuell entfaltet und mit Schrauben oder Nieten fixiert, wie in Fig. 4 gezeigt. Schließlich wird die Faltung wieder manuell hergestellt und der gefaltete Gassack 10 in der Aufnahme verstaut. Nach dem Verschließen der Aufnahme ist die Montage abgeschlossen (Fig. 5) und das Modul 14 kann am vorgesehenen Ort im Fahrzeuginnenraum eingebaut werden.

## Patentansprüche

1. Verfahren zum Überführen eines Gassacks (10) für ein Fahrzeuginsassen-Rückhaltesystem in eine für den Gassack (10) vorgesehene Aufnahme mit folgenden Schritten:
- Falten des Gassacks (10);
- Erwärmen des gefalteten Gassacks (10) auf eine Temperatur zwischen 60 und 120°C;
- Pressen des gefalteten Gassacks (10) mit einem Druck zwischen 1 und 2 bar und gleichzeitiges Abkühlen des gefalteten Gassacks (10); und
- Befestigen des Gassacks (10) in der Aufnahme.

2. Verfahren nach einem der vorhergehenden Ansprüche, **dadurch gekennzeichnet, daß** der gefaltete Gassack (10) nach dem Abkühlen im gefalteten Zustand gehalten wird.

3. Verfahren nach Anspruch 2, **dadurch gekennzeichnet, daß** der Gassack (10) in einem Formgehäuse gehalten wird.

4. Verfahren nach Anspruch 2, **dadurch gekennzeichnet, daß** der Gassack (10) in einer Folie gehalten wird.

5. Verfahren nach Anspruch 2, **dadurch gekennzeichnet, daß** der Gassack (10) in ein Magazin (12) eingelegt wird.

6. Verfahren nach einem der Ansprüche 2 bis 5, **dadurch gekennzeichnet, daß** der Gassack (10) nach dem Halten im gefalteten Zustand und vor dem Befestigen in der Aufnahme weiterbearbeitet wird.

7. Verfahren nach Anspruch 6, **dadurch gekennzeichnet, daß** der Gassack (10) zur Weiterbearbeitung zwischenzeitlich wenigstens teilweise entfaltet wird.

8. Verfahren nach Anspruch 6 oder 7, **dadurch gekennzeichnet, daß** an dem Gassack (10) wenigstens eine Naht angebracht wird.

9. Verfahren nach einem der Ansprüche 6 bis 8, **dadurch gekennzeichnet, daß** an dem Gassack (10) wenigstens ein Fangband (16) angebracht wird.

10. Verfahren nach einem der vorhergehenden Ansprüche, **dadurch gekennzeichnet, daß** der Gassack (10) zum Befestigen in der Aufnahme zwischenzeitlich wenigstens teilweise entfaltet wird.

## Claims

1. A method of transferring a gas bag (10) for a vehicle occupant restraint system into a mounting provided for the gas bag (10), comprising the following steps:
- folding the gas bag (10);
- heating the folded gas bag (10) to a temperature between 60 and 120° C;
- pressing the folded gas bag (10) with a pressure between 1 and 2 bar and simultaneously cooling the folded gas bag (10); and
- fastening the gas bag (10) in the mounting.

2. The method according to any of the preceding Claims, **characterised in that** the folded gas bag (10) is kept in the folded state after cooling.

3. The method according to Claim 2, **characterised in that** the gas bag (10) is held in a shaped housing.

4. The method according to Claim 2, **characterised in that** the gas bag (10) is held in a foil.

5. The method according to Claim 2, **characterised in that** the gas bag (10) is placed into a magazine (12).

6. The method according to any of Claims 2 to 5, **characterised in that** the gas bag (10) is further processed after being kept in the folded state and before being fastened in the mounting.

7. The method according to Claim 6, **characterised in that** the gas bag (10) is at least partially unfolded in the meantime for further processing.

8. The method according to Claim 6 or 7, **characterised in that** at least one seam is applied on the gas bag (10).

9. The method according to any of Claims 6 to 8, **characterised in that** at least one tether (16) is fitted to the gas bag (10).

10. The method according to any of the preceding claims, **characterised in that** for fastening in the mounting, the gas bag (10) is at least partially unfolded in the meantime.

## Revendications

1. Procédé de transfert d'un coussin à gaz (10) pour un système de retenue des occupants d'un véhicule dans un logement prévu pour le coussin à gaz (10), comprenant les étapes suivantes :
- pliage du coussin à gaz (10) ;
- réchauffage du coussin à gaz (10) plié à une température entre 60 et 120°;
- compression du coussin à gaz (10) plié avec une pression entre 1 et 2 bar et refroidir simultanément le coussin à gaz (10) plié ; et
- fixation dh coussin à gaz (10) dans le logement.

2. Procédé selon l'une des revendications précédentes, **caractérisé en ce que** le coussin à gaz (10) plié est maintenu dans l'état plié après le refroidissement.

3. Procédé selon la revendication 2, **caractérisé en ce que** le coussin à gaz (10) est maintenu dans un boîtier formé.

4. Procédé selon la revendication 2, **caractérisé en ce que** le coussin à gaz (10) est maintenu dans une feuille.

5. Procédé selon la revendication 2, **caractérisé en ce que** le coussin à gaz (10) est inséré dans un magasin (12).

6. Procédé selon l'une des revendications 2 à 5, **caractérisé en ce que** le coussin à gaz (10) est encore façonné après son maintien à l'état plié et avant la fixation dans le logement.

7. Procédé selon la revendication 6, **caractérisé en ce que** le coussin à gaz (10) est entre-temps déplié au moins partiellement pour être encore façonné.

8. Procédé selon la revendication 6 ou 7, **caractérisé en ce qu'**au moins une couture est appliquée sur le coussin à gaz (10).

9. Procédé selon l'une des revendications 6 à 8, **caractérisé en ce qu'**au moins une bande de garde (16) est appliquée sur le coussin à gaz (10).

10. Procédé selon l'une des revendications précédentes, **caractérisé en ce que** le coussin à gaz (10) est entre-temps déplié au moins partiellement pour être fixé dans le logement.
